(19) Europäisches Patentamt
European Patent Office
Office européen des brevets

(11) **EP 0 376 321 B1**

(12) **EUROPÄISCHE PATENTSCHRIFT**

(45) Veröffentlichungstag und Bekanntmachung des Hinweises auf die Patenterteilung:
**27.03.1996 Patentblatt 1996/13**

(51) Int. Cl.[6]: **B29C 53/12**, B29C 53/32, F16L 27/00

(21) Anmeldenummer: **89124092.1**

(22) Anmeldetag: **28.12.1989**

(54) **Rohrwendeln und Verfahren zu deren Herstellung**

Coiled tubes and process for making same

Serpentin, et procédé pour sa fabrication

(84) Benannte Vertragsstaaten:
**DE FR GB IT**

(30) Priorität: **29.12.1988 DE 3844256**

(43) Veröffentlichungstag der Anmeldung:
**04.07.1990 Patentblatt 1990/27**

(73) Patentinhaber: **EMS-INVENTA AG**
**CH-8001 Zürich (CH)**

(72) Erfinder: **Zeh, Bernhard**
**CH-7203 Trimmis (CH)**

(74) Vertreter: **Müller-Boré & Partner**
**Patentanwälte**
**Grafinger Strasse 2**
**D-81671 München (DE)**

(56) Entgegenhaltungen:
**WO-A-84/03545**      **GB-A- 2 056 615**
**US-A- 3 245 431**      **US-A- 4 196 031**

• **PATENT ABSTRACTS OF JAPAN vol. 8, no. 274 (M-345)(1711) 14. Dezember 1984 & JP-A-59 144 837 (HITACHI KASEI KOGYO K.K.) 20. August 1984**

EP 0 376 321 B1

## Beschreibung

Die Erfindung betrifft ein Verfahren zur Herstellung von Rohrwendeln aus thermoplastisch verarbeitbaren Polymeren, wobei ein extrudiertes Rohr in kaltem Zustand, vorzugsweise bei Raumtemperatur unter Verdrehung um seine eigene Längsachse unter etwa rechtwinkliger Zuführung auf einen Dorn gewickelt und nachfolgend einer Thermofixierung unterzogen wird, sowie Rohrwendeln bestehend aus einem extrudierten Rohr aus thermoplastischen Polymeren, das in Form einer Wendel gewickelt und thermofixiert ist.

Derartige druckfeste biegeelastische Rohrwendeln werden zum Leiten eines Druckmittels verwendet. Die Rohrwendeln zum Leiten von unter Druck stehenden Medien werden häufig an pneumatischen Geräten in der Industrie benötigt, insbesondere für Lastkraftwagen oder Zugkombinationen als flexible Verbindungen zwischen Zug- und/oder Anhängerwagen. Bei Verwendung derartiger biege- und zugelastischer Rohrwendeln ist es nicht erforderlich, Haspeln, Gegengewichte oder dergleichen zum Einrollen oder Verstauen der benötigten Rohrlänge einzusetzen.

Verfahren zur Herstellung von Rohrwendeln durch nachträgliche Formgebung durch Wickeln und Thermofixierung sind beispielsweise aus den US-PSen 3021871 und 3245431 sowie der GB-PS 1518424 bekannt. Das Rückstellverhalten nach derartigen Verfahren hergestellter Wendeln ist aber ungenügend. Ferner ist es bekannt, das Rückstellvermögen von Rohrwendeln durch mehrschichtigen Aufbau oder durch den Einsatz mehrerer Polymerkomponenten zu verbessern. Polymermodifikationen sind jedoch für die Herstellung von Rohrwendeln für Sicherheitsteile und für Druckluftbremsanlagen nicht zugelassen, insbesondere wenn die Rohrwendeln mit extrahierend wirkenden Medien wie Treibstoffen, Schmier-und Hydraulikölen, Lacken und Lösungsmitteln sowie mit UV-Strahlung und Wärme in Verbindung kommen, die die Rohrwendeln verspröden können.

Die DE-PS 31 38 021 beschreibt die Herstellung einer drallfreien Drahtwendel, deren Verformungsdrall nach dem Fixieren durch einen zusätzlich coaxial aufgebrachten Drall, der die Wendel verengt, kompensiert wird.

In DE-PS 29 40 052 wird der durch die Verformung eines Kunststoffprofils zur Wendel ausgelöste Drall ebenfalls nach dem Fixieren durch eine coaxiale aber entgegengesetzt gerichtete Drehbewegung vermindert.

Die GB-A-2 056 615 beschreibt eine Schraubenfeder, die, aus einem inneren Gummirohr, das, aus mehreren Lagen von vorzugsweise mit Epoxi- oder Polyesterharz imprägnierten und gleichartig ausgerichteten Verstärkungsfasern gewickelt, unter einer auf die Faserrichtung abgestimmten Torsion hergestellt wird.

Es ist bekannt, in Drähten durch schraubenförmiges Aufwickeln unter Torsion und Zug Federspannungen oder Schlingen zu erzeugen, wie dies in der WO 84/03545 für Monofile und Faserbündel beschrieben wird. Dabei bilden sich die Schlingen, sobald die Torsion eine bestimmte Anzahl Umdrehungen erreicht hat. Gleichzeitig muß die Schlingenbildung durch ein Torsionssperrorgan, das bevorzugt als eine Rolle ausgebildet ist, begrenzt werden.

Die Herstellung von Rohren mit grösseren Wandstärken aus steifen Polymeren ist mit diesen Verfahren jedoch problematisch.

Die Anforderung an die Werkstoffe für Rohrwendeln für Druckluftbremsanlagen aus Polyamid sind in der DIN 74323 und in der SAE J 844 angegeben.Für das Rückstellverhalten R wird in der DIN 74323 die Länge $l_o$ in ungespanntem Zustand mit der Länge $l_s$ in gespanntem Zustand verglichen. In Uebereinstimmung mit bereits erwähntem Vorgehen wird z.Bsp. die Rohrwendel während 60 Sekunden mit einer Auszugskraft von maximal 50 N bis zu einer Länge von 5 Metern gespannt und die Länge $l_s$ wird 5 Minuten nach Entlastung gemessen. Der Rückstellfaktor R berechnet sich dann gemäss der Gleichung:

$$R = \frac{l_s - a - b}{l_o - a - b}$$

wobei a und b die Anschlusslängen bis zur Wendel sind.

Die mit den bekannten Verfahren hergestellten Rohrwendeln weisen keine zufriedenstellende Rückstellfaktoren R auf.

Der Erfindung liegt die Aufgabe zugrunde, ein Verfahren zur Herstellung von Rohrwendeln und Rohrwendeln aus thermoplastisch verarbeitbaren Polymeren zu schaffen, die ein hohes Rückstellvermögen, das heisst einen kleinen Rückstellfaktor R aufweisen, und die speziell für den industriellen Einsatz und die Verwendung in Druckluftbremsanlagen geeignet sind.

Diese Aufgabe wird erfindungsgemäss an einem aus thermoplastischen Polymeren extrudierten Rohr, das in kaltem Zustand, vorzugsweise bei Raumtemperatur, unter etwa rechtwinkliger Zuführung auf einen Dorn gewickelt wird, dadurch gelöst, dass das Rohr während seiner Zuführung zum Aufwickeln auf den Dorn, in Zuführrichtung gesehen entgegengesetzt der Drehrichtung der sich bildenden Wendel, um seine Längsachse verdreht wird, bevor es der Thermofixierung unterzogen wird.

Wenn die Drehrichtung der sich bildenden Wendel diejenige einer Schraube mit Rechtsgewinde, d.h. eine Rechtsdrehung ist, dann wird das Rohr bei seiner Zuführung zum Aufwickeln in Zuführrichtung gesehen mit der Drehrichtung einer Linksschraube, d.h. einer Linksdrehung verdreht. Umgekehrt, wenn die Drehrichtung der sich bildenden Wendel eine Linksdrehung ist, dann wird das Rohr bei seiner Zuführung zum Aufwickeln in Zuführrichtung gesehen mit einer Rechtsdrehung verdreht.

Erfindungsgemässe Rohrwendeln aus Rohren aus thermoplastisch verarbeitbaren Polymeren, die nach der Extrusion vor oder gleichzeitig mit dem Wickeln in kaltem Zustand um die Rohrachse verdreht werden, zeigen, dass die eingebrachte Verdrehspannung nach dem anschliessenden Thermofixieren nicht vollständig verloren geht. Die sich bei derartigen Rohrwendeln ergebende Rückstellkraft hängt von dem Verdrehungswinkel ab. Vorzugsweise erfolgt die Verdrehung um einen Winkel von mehr als 5° pro Windung, beispielsweise von mehr als 45° und insbesondere zwischen 180° und 360°.

Ein Rückstellfaktor R von 1,8 lässt sich bei Rohrwendeln aus Polyamid 12 beispielsweise leicht mit einem Verdrehwinkel von 45° +/- 10° erreichen. Für Werte des Rückstellfaktors R von weniger als 1,5 , insbesondere von weniger als 1,35 und besonders bevorzugt von 1,2, werden materialabhängig steigende Verdrehwinkel bis 360° pro Windung wirksam.

Die Abmessung des extrudierten, unverdrehten Rohrstranges, beispielsweise der lichte Durchmesser und die Wandstärke, sind, abhängig vom Verwendungszweck, durch Normen festgelegt. Die Wandstärke richtet sich dabei nach dem aufzunehmenden Druckmittel und dem Innendruck. Im allgemeinen weisen derartige Rohrwendeln einen Innendurchmesser von 2,0 - 26,0 mm, vorzugsweise von 4,0 -18,0 mm und eine mittlere Wandstärke von 0,2 - 4,0 mm, vorzugsweise von 0,75 - 2,5 mm auf. Derartige Rohrwendeln sind Betriebsdrücken bis etwa 14 bar bei Raumtemperatur und bis 7 bar bei 90°C gewachsen.

Die Thermofixierung nach dem Verdrehen und Aufwickeln des extrudierten Rohres auf dem Dorn folgt zwischen 80°C und 250°C. Wenn das Ausgangsmaterial, aus welchem das Rohr extrudiert wird, aus einem oder mehreren semikristallinen Polyamiden oder deren Mischungen, aus Mischungen aus semikristallinen und amorphen Polyamiden, aus einem oder mehreren amorphen Polyamiden oder aus Mischungen derartiger Polyamide mit strukturell anderen Polyamiden oder anderen Polymeren besteht, beispielsweise aus Polyamid 11 oder 12, Polyamid 12,12, Polyamid 6 oder 6,6 oder aus deren Mischungen, erfolgt die Thermofixierung vorzugsweise bei einer Temperatur von 100°C bis 200°C und insbesondere bei einer Temperatur von 120°C und 160°C.

Das Ausgangsmaterial kann bis zu 35 Gew.-% Weichmacher und/oder bis zu 30 Gew.% Schlagzähmodifizierer und/oder sonstige Additive, Verarbeitungshilfen, Farbstoffe od. dgl. enthalten.

Gemäss einer weiteren bevorzugten Ausführungsform kann das Ausgangsmaterial ein hochmolekularer Polyester sein. Insbesondere kann das Ausgangsmaterial aus mehreren Polyestern oder Polyesterblends bestehen. Auch diesem Ausgangsmaterial können bis zu 35 Gew.% Weichmacher und/oder bis zu 30 Gew.% Schlagzähmodifizerer und/oder sonstige Additive, Verarbeitungshilfen, Farbstoffe oder dergleichen zugegeben werden.

Die Thermofixierung einer Rohrwendel aus einem hochmolekularen Polyester erfolgt vorzugsweise zwischen 100°C und 230°C und insbesondere zwischen 130°C und 180°C.

Bei derartigen Rohrwendeln aus einem hochmolekularen Polyester lassen sich Rückstellfaktoren R von 2,0 nach 1 min. Entlastung bei Verdrehwinkeln von etwa 180° +/- 10° erreichen. Für Werte von R kleiner 2,0 sind materialabhängig steigende Verdrehwinkel bis 360° pro Wendel wirksam.

Gemäss einer weiteren bevorzugten Ausführungsform werden die extrudierten Rohre aus thermoplastisch verarbeitbarem Polymer verstärkt, beispielsweise mit einer Verstärkung aus Spinnfäden, die um das erfindungsgemäss gewendelte Rohr angeordnet ist. Die Verstärkung kann von einem Schutzmantel umgeben werden.

Die Thermofixierung der um ihre Längsachse verdrehten und aufgewickelten extrudierten Rohre erfolgt vorzugsweise in Luft oder in einem flüssigen Medium, z.Bsp. in einem Mineralöl-, Siliconöl- oder Polydiol-Bad, wobei die Fixierungszeit nur 30-35% im Vergleich zur Fixierungszeit an der Luft beträgt.

Generell hängt die Fixierungszeit von der Wanddicke ab:
z.Bsp. in Luft bei 1 mm Polyamid-Rohrwendel 10 - 15 Minuten
bei 2 mm Polyamid-Rohrwendel 20 - 30 Minuten

Eine erfindungsgemässe Rohrwendel, die aus einem extrudiertem Rohr aus thermoplastisch verarbeitbaren Polymeren besteht, das in Form einer Wendel gewickelt und thermofixiert ist, ist dadurch gekennzeichnet, dass das Rohr eine Verdrehung um seine Längsachse aufweist. Diese Verdrehung erfolgte unter etwa rechtwinkliger Zuführung zum Aufwickeln auf einen Dorn, in Zuführrichtung gesehen entgegengesetzt der Drehrichtung der Rohrwendel vor der Thermofixierung.

Das extrudierte Rohr und damit die Rohrwendel besteht aus einem oder mehreren semikristallinen Polyamiden oder deren Mischungen, aus Mischungen aus semikristallinen und amorphen Polyamiden, aus einem oder mehreren amorphen Polymiden oder aus Mischungen derartiger Polyamide mit strukturell anderen Polyamiden oder anderen Polymeren. Das semikristalline Polyamid ist vorzugsweise Polyamid 11 oder 12 oder 12,12 oder 6 oder aus 6,6 oder deren Mischungen. Gemäss einer weiteren bevorzugten Ausführungsform besteht das extrudierte Rohr und damit die Rohrwendel aus einem hochmolekularen Polyester, aus mehreren Polyestern oder Polyesterblends.

Vorzugsweise enthält das Rohrmaterial bis zu 30 Gew.% Weichmacher und/oder bis zu 30 Gew.% Schlagzähmodifizierer und/oder sonstige Additive, Verarbeitungshilfen, Farbstoffe oder dergleichen.

Das Rohr ist vorzugsweise mit einer Verstärkung versehen, die insbesondere aus Spinnfäden (braiding) besteht, die um das erfindungsgemäss gewendelte Rohr angeordnet ist. Die Verstärkung kann von einem Schutzmantel umgeben sein.

Das Rohr weist vorzugsweise eine Wandstärke von 0,3 mm - 3,0 mm, insbesondere von 1,0 - 2,0 mm, und einen lichten Durchmesser von 2,0 - 26,0 mm, insbesondere von 4,0 - 18,0 mm auf.

Ausführungsbeispiele der Erfindung werden nachstehend anhand der Figuren und der Beispiele erläutert.

In der Zeichnung sind dargestellt:

Fig. 1    zwei Endteile einer erfindungsgemässen gebrauchsfähigen Rohrwendel und

Fig. 2    eine schematische Darstellung des Verhältnisses der Drehrichtung der Wendel zur Richtung der Verdrehung des Rohres bei deren Herstellung.

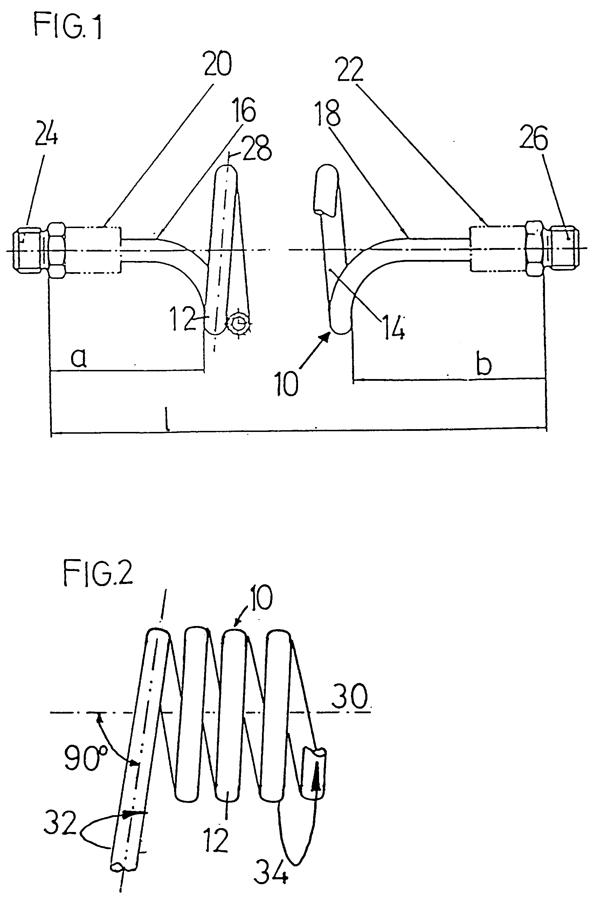

Die Fig. 1 zeigt eine Rohrwendel 10 aus einem Rohr aus einem Polyamid oder einem Polyester. Die Rohrwendel 10 besteht aus einer Vielzahl von Windungen 12, 14, die abhängig ist von dem Abstand, den die Rohrwendel überbrücken muss. An den Enden sind gerade Anschlusslängen 16, 18 ausgebildet, an welchen Anschlussstücke 20, 22 mit Anschlussgewinden 24, 26 befestigt sind. Die Anschlusslänge 16 weist eine Länge a und die Anschlusslänge 18 eine Länge 5 b auf. Die gesamte Länge der Rohrwendel 10 bis zu den Anschlussgewinden 24 und 26 ist mit l bezeichnet. l entspricht der Länge $l_o$, wenn die Rohrwendel in ungespanntem Zustand ist, und $l_s$, wenn die Rohrwendel gespannt ist. Der Rückstellfaktor R ergibt sich dann als Verhältnis der Länge $l_s$ zu der Länge $l_o$, vermindert jeweils um die Anschlusslängen a und b:

$$R = \frac{l_s - a - b}{l_o - a - b}$$

An der Windung 12 ist mit dem Bezugszeichen 28 die Längsmittelachse dargestellt.

Fig. 2 macht die Beziehung der Verdrehrichtung des Rohres zur Drehrichtung der sich bildenden Wendel anschaulich. Die Wendel bildet sich in Richtung der Pfeilachse 30 und weist eine mit 34 angedeutete Linksdrehung auf. Das Rohr selber wird bei seiner Zuführung in Zuführrichtung gesehen, mit einer bei 32 angedeuteten Rechtsdrehung versehen, während es unter einem Winkel von ca. 90° zur Wendelachse 30 angeordnet wird.

Beispiele

Beispiele 1- 3 betreffen Rohrwendeln aus Polyamid.

Drei verschiedene Polymere wurden auf einer Maillefer-Rohrextrusionsanlage zu Rohren mit den Abmessungen 12 x 1.5 mm extrudiert.

Die extrudierten Rohre wurden anschliessend kalt um einen Dorn von 90 mm Durchmesser aufgewickelt. Es wurden 20 Windungen aufgebracht. Mit A sind die Rohre bezeichnet, die ohne Verdrehung um die Längsachse aufgewickelt wurden, während mit B die Rohre bezeichnet sind, die während des Aufwickelns eine Verdrehung erfahren haben. Der Verdrehwinkel wurde auf 180° pro Windung eingestellt. Nach dem Aufwickeln wurde die Wendel beidseitig an dem Dorn fixiert und in heisser Luft während 20 min. thermofixiert. Nach dem Erkalten wurde an den Rohrwendeln das Rückstellverhalten nach DIN 74323 gemessen.

| Versuch | Werkstoff-Typ | Thermofixiertemperature °C | Verdrehwinkel in Grad | Rückstellfaktor |
|---|---|---|---|---|
| | Grilon | | | |
| 1A | R47W40 | 150-160 | 0 | 1,50 |
| 1B | R47W40 | 150-160 | 180 | 1,17 |
| | Grilamid | | | |
| 2A | L25W40 | 130-140 | 0 | 2,00 |
| 2B | L25W40 | 130-140 | 180 | 1,18 |
| | Rilsan | | | |
| 3A | Besno P40TL | 140-150 | 0 | 1,54 |
| 3B | Besno P40TL | 140-150 | 180 | 1,05 |
| Grilon R47W40 : hochviskoser PA 6-Typ für Rohr-Extrusion der EMS-CHEMIE AG/CH<br>Grilamid L25W40 : hochviskoser PA 12-Typ für Rohr-Extrusion der EMS-CHEMIE AG/CH<br>Rilsan Besno P40TL : hochviskoser PA 11-Typ für Rohr-Extrusion der ATO CHEMIE / F | | | | |

Beispiel 4

Eine Polyester-Rohrwendel aus Hytrel 6356 wurde auf einer Maillefer- Rohrextrusionsanlage zu Rohren der Dimension 12 x 1,5 mm verarbeitet. Die extrudierten Rohre wurden anschliessend kalt um einen Dorn mit 90 mm Durchmesser aufgewickelt. Es wurden 20 Windungen aufgebracht, wobei bei Versuch A das Rohr ohne jegliche Verdrehung aufgewickelt und bei Versuch B das Rohr während des Aufwickelns um die Längsachse verdreht wurde. Der Verdrehwinkel wurde auf 180° pro Windung eingestellt. Nach dem Fixieren der Enden der Rohrwendel auf dem Dorn wurde diese in heisser Luft bei 160 - 180°C während 20 min. thermofixiert. Nach dem Erkalten wurde an den Wendeln das Rückstellverhalten untersucht. Die Rohrwendeln wurden, da keine DIN für Polyester - Rohrwendeln besteht, mit einem Gewicht von 1000 g belastet und 24 Stunden lang aufgehängt. Nach der Entlastung wurde die Länge der Wendel nach bestimmten Zeitintervallen gemessen. Die Ausgangslänge $l_o$ der Rohrwendel betrug 250 mm.

| Versuch | A | | B | |
|---|---|---|---|---|
| Verdrehwinkel (in Grad) | 0 | | 180 | |
| Zeit n. Entlastung | $l_s$ (mm) | R | $l_s$ (mm) | R |
| 1 min. | 980 | 3,92 | 500 | 2,00 |
| 5 min. | 940 | 3,76 | 430 | 1,72 |
| 15 min. | 900 | 3,60 | 420 | 1,68 |
| 30 min. | 810 | 3,24 | 360 | 1,44 |
| 24 std. | 710 | 2,84 | 300 | 1,20 |

Hytrel 6356 ist ein Polyester-Elastomer-Typ der Du Pont/USA.

**Patentansprüche**

1. Verfahren zur Herstellung von Rohrwendeln aus thermoplastisch verarbeitbaren Polymeren, wobei ein extrudiertes Rohr im kalten Zustand, vorzugsweise bei Raumtemperatur, unter etwa rechtwinkliger Zuführung auf einen Dorn gewickelt und nachfolgend einer Thermofixierung unterzogen wird, dadurch gekennzeichnet, dass das Rohr während seiner Zuführung zum Aufwickeln auf den Dorn, in Zuführrichtung gesehen, entgegengesetzt der Drehrichtung der sich bildenden Wendel, um seine eigene Längsachse verdreht wird.

2. Verfahren nach Anspruch 1, dadurch gekennzeichnet, dass die Verdrehung pro Windung um einen Winkel von mehr als 5°, bevorzugt um einen Winkel von mehr als 45° erfolgt, der besonders bevorzugt zwischen 180° und 360° pro Windung liegt.

3. Verfahren nach einem der Ansprüche 1 oder 2, dadurch gekennzeichnet, dass das Ausgangsmaterial aus einem oder mehreren semikristallinen Polyamiden oder deren Mischungen, aus Mischungen aus semikristallinen und amorphen Polyamiden, aus einem oder mehreren amorphen Polyamiden oder aus Mischungen derartiger Polyamide mit strukturell anderen Polyamiden oder anderen Polymeren besteht, wobei das semikristalline Polyamid, bevorzugt Polyamid 11 oder 12, oder 12,12, 6 oder 6,6 oder aus deren Mischung ist.

4. Verfahren nach einem der Ansprüche 1 oder 2, dadurch gekennzeichnet, dass das Ausgangsmaterial aus einem oder mehreren hochmolekularen Polyestern oder Polyesterblends besteht.

5. Verfahren nach einem der Ansprüche 3 oder 4, dadurch gekennzeichnet, dass bis zu 35 Gew.% Weichmacher und/oder bis zu 30 Gew.% Schlagzähmodifizierer und/oder sonstige Additive, Verarbeitungshilfen, Farbstoffe od.dgl. zugegeben werden.

6. Verfahren nach einem der Ansprüche 3 bis 5, dadurch gekennzeichnet, dass die Thermofixierung bei einer Temperatur zwischen 80°C und 250°C erfolgt, wobei für Polyamide bevorzugt eine Temperatur von 100°C bis 200°C und besonders bevorzugt eine Temperatur von 120°C bis 160°C angewendet wird und für Polyester bevorzugt eine Temperatur zwischen 100°C und 230°C und besonders bevorzugt zwischen 130°C und 180°C angewendet wird.

7. Verfahren nach einem der Ansprüche 1 bis 6, dadurch gekennzeichnet, dass die Thermofixierung in Luft oder in einem flüssigen Medium, bevorzugt in Mineralöl, Siliconöl oder Polydiol erfolgt.

8. Verfahren nach einem der Ansprüche 1 bis 7, dadurch gekennzeichnet, dass das Rohr mit einer Verstärkung ausgebildet ist, die bevorzugt aus Spinnfäden (braiding) gebildet und um das gewendelte Rohr angeordnet ist und besonders bevorzugt von einem Schutzmantel umgeben ist.

9. Verfahren nach einem der Ansprüche 1 bis 8, dadurch gekennzeichnet, dass das Rohr eine Wandstärke von 0,3 bis 3,0 mm und einen lichten Durchmesser von 2,0 bis 26,0 mm und bevorzugt eine Wandstärke von 1,0 bis 2,0 mm und einen lichten Durchmesser von 4,0 bis 18,0 mm aufweist.

10. Rohrwendel, bestehend aus einem extrudierten Rohr aus thermoplastisch verarbeitbaren Polymeren, das in Form einer Wendel gewickelt und thermofixiert ist, hergestellt nach dem Verfahren nach den Ansprüchen 1 bis 9, dadurch gekennzeichnet, dass das Rohr in Zuführrichtung gesehen eine Verdrehung um seine eigene Längsachse entgegen der Drehrichtung der Wendel um einen Winkel von mehr als 5° pro Windung aufweist.

11. Rohrwendel nach Anspruch 10, dadurch gekennzeichnet, dass das Ausgangsmaterial aus einem oder mehreren semikristallinen Polyamiden oder deren Mischungen, aus Mischungen aus semikristallinen und amorphen Polyamiden aus einem oder mehreren amorphen Polyamiden oder aus Mischungen derartiger Polyamide mit strukturell anderen Polyamiden oder anderen Polymeren besteht, wobei das semikristalline Polyamid, bevorzugt Polyamid 11 oder 12, 6 oder 66 oder deren Mischung ist.

12. Rohrwendel nach Anspruch 10, dadurch gekennzeichnet, dass das Ausgangsmaterial aus einem oder mehreren hochmolekularer Polyestern oder Polyesterblends besteht.

13. Rohrwendel nach Anspruch 12, dadurch gekennzeichnet, dass das Ausgangsmaterial bis zu 35 Gew.% Weichmacher und/oder bis zu 30 Gew.% Schlagzähmodifizierer und/oder sonstige Additive, Verarbeitungshilfen, Farbstoffe od. dgl. enthält.

14. Rohrwendel nach einem der Ansprüche 10 bis 13, dadurch gekennzeichnet, dass um das Rohr eine Verstärkung angeordnet ist, die bevorzugt aus Spinnfäden (braiding) besteht und besonders bevorzugt von einem Schutzmantel umgeben ist.

15. Rohrwendel nach einem der Ansprüche 10 bis 14, gekennzeichnet durch Wandstärken von 0,3 mm bis 3,0 mm und lichte Durchmesser von 2,0 bis 26,0 mm und bevorzugt durch Wandstärken von 1,0 bis 2,0 mm und lichte Durchmesser von 4,0 mm bis 18,0 mm.

**Claims**

1. Process for producing pipe coils from thermoplastically processible polymers, wherein an extruded pipe is wound in the cold state, preferably at room temperature, onto a mandrel while being supplied substantially at a right angle and is subsequently subjected to heat-setting, characterised in that, while being supplied for winding onto the mandrel, the pipe is twisted round its own longitudinal axis in opposition to the direction of rotation of the coil being formed, as viewed in the supply direction.

2. Process according to claim 1, characterised in that the twist per winding occurs at an angle greater than 5°, preferably at an angle greater than 45°, which is particularly preferably between 180° and 360° per winding.

3. Process according to one of claims 1 or 2, characterised in that the starting material consists of one or more semi-crystalline polyamides or mixtures thereof, of mixtures of semi-crystalline and amorphous polyamides, of one or more amorphous polyamides or of mixtures of these polyamides with structurally different polyamides or other polymers, the semi-crystalline polyamide preferably being polyamide 11 or 12, or 12,12, 6 or 6,6 or a mixture thereof.

4. Process according to one of claims 1 or 2, characterized in that the starting material consists of one or more high-molecular-weight polyesters or polyester blends.

5. Process according to one of claims 3 or 4, characterised in that up to 35% by weight of plasticisers and/or up to 30% by weight of impact resistance modifiers and/or other additives, processing aids, colorants or the like are added.

6. Process according to one of claims 3 to 5, characterised in that the heat-setting takes place at a temperature between 80°C and 250°C, a temperature of 100°C to 200°C preferably and a temperature of 120°C to 160°C particularly preferably being employed for polyamides and a temperature between 100°C and 230°C preferably and between 130°C and 180°C particularly preferably being employed for polyesters.

7. Process according to one of claims 1 to 6, characterised in that the heat-setting takes place in air or in a fluid medium, preferably in mineral oil, silicone oil or polydiol.

8. Process according to one of claims 1 to 7, characterised in that the pipe is designed with a reinforcement which is preferably formed from braiding, is to be arranged round the coiled pipe and is particularly preferably surrounded by a protective sheath.

9. Process according to one of claims 1 to 8, characterised in that the pipe has a wall thickness of 0.3 to 3.0 mm and an internal diameter of 2.0 to 26.0 mm and preferably a wall thickness of 1.0 to 2.0 mm and an internal diameter of 4.0 to 18.0 mm.

10. Pipe coil consisting of an extruded pipe of thermoplastically processible polymers which is wound and heat-set in the form of a coil, produced by the process according to claims 1 to 9, characterised in that the pipe has a twist round its own longitudinal axis at an angle greater than 5° per winding in opposition to the direction of rotation of the coil, as viewed in the supply direction.

11. Pipe coil according to claim 10, characterised in that the starting material consists of one or more semi-crystalline polyamides or mixtures thereof, of mixtures of semi-crystalline and amorphous polyamides of one or more amorphous polyamides or of mixtures of these polyamides with structurally different polyamides or different polymers, the semi-crystalline polyamide preferably being polyamide 11 or 12, 6 or 66 or a mixture thereof.

12. Pipe coil according to claim 10, characterised in that the starting material consists of one or more high-molecular weight polyesters or polyester blends.

13. Pipe coil according to claim 12, characterized in that the starting material contains up to 35% by weight of plasticisers and/or up to 30% by weight of impact resistance modifiers and/or other additives, processing aids, colorants or the like.

**14.** Pipe coil according to one of claims 10 to 13, characterised in that a reinforcement is arranged round the pipe, the reinforcement preferably consisting of braiding and particularly preferably being surrounded by a protective sheath.

**15.** Pipe coil according to one of claims 10 to 14, characterised by wall thicknesses of 0.3 mm to 3.0 mm and internal diameters of 2.0 to 26.0 mm and preferably by wall thicknesses of 1.0 to 2.0 mm and internal diameters of 4.0 mm to 18.0 mm.

## Revendications

**1.** Procédé de fabrication de tubes hélicoïdaux en polymères qui peuvent être mis en oeuvre par voie thermoplastique, dans lequel on enroule un tube extrudé, à froid et de préférence à la température ambiante, en l'amenant à peu pris à angle droit sur un mandrin, et on le sourmet à une thermofixation, caractérisé en ce que, pendant qu'on amène le tube pour l'enrouler sur le mandrin, on imprime au tube, vu dans le sens de son avancement, une torsion autour de son axe longitudinal, dans le sens contraire au sens d'enroulement de l'hélice en formation.

**2.** Procédé conforme à la revendication 1, caractérisé en ce que l'angle de torsion par spire vaut plus de 5°, de préférence, plus de 45°, et en particulier, entre 180° et 360°.

**3.** Procédé conforme à l'une des revendications 1 et 2, caractérisé en ce que le matériau de départ est constitué d'un ou de plusieurs polyamides semi-cristallins ou de leurs mélanges, de mélanges de polyamides semi-cristallins et de polyamides amorphes, d'un ou de plusieurs polyamides amorphes, ou de mélanges de tels polyamides avec des polyamides de structure différente ou d'autres polymères, le polyamide semi-cristallin étant de préférence un polyamide 11, 12, 6, 12-12 ou 6-6, ou un mélange de ceux-ci.

**4.** Procédé conforme à l'une des revendications 1 et 2, caractérisé en ce que le matériau de départ est constitué d'un ou de plusieurs polyesters ou alliages de polyesters à masse moléculaire élevée.

**5.** Procédé conforme à l'une des revendications 3 et 4, caractérisé en ce que l'on ajoute jusqu'à 35 % en poids d'un plastifiant et/ou jusqu'à 30 % en poids d'un modificateur de la résistance au choc et/ou d'autres adjuvants, auxiliaires de traitement, colorants ou similaires.

**6.** Procédé conforme à l'une des revendications 3 à 5, caractérisé en ce que l'on effectue la thermofixation à une température située entre 80°C et 250°C, avec d'une part, dans le cas d'un polyamide, une préférence pour une température de 100°C à 200°C, et en particulier, pour une température de 120°C à 160°C, et d'autre part, dans le cas d'un polyester, une préférence pour une température de 100°C à 230°C, et en particulier, pour une température de 130°C à 180°C.

**7.** Procédé conforme à l'une des revendications 1 à 6, caractérisé en ce que l'on effectue la thermofixation dans l'air ou dans un milieu liquide, de préférence dans une huile minérale, une huile de silicone ou un polydiol.

**8.** Procédé conforme à l'une des revendications 1 à 7, caractérisé en ce que le tube est muni d'un renfort, qui est de préférence constitué de fils (câblage) et disposé autour du tube enroulé, et mieux encore, entouré d'une enveloppe de protection.

**9.** Procédé conforme à l'une des revendications 1 à 9, caractérisé en ce que le tube présente une épaisseur de paroi de 0,3 à 3,0 mm et un diamètre de passage de 2,0 à 26,0 mm, et de préférence, une épaisseur de paroi de 1,0 à 2,0 mm et un diamètre de passage de 4,0 à 18,0 mm.

**10.** Tube hélicoïdal, constitué d'un tube extrudé en polymères pouvant être mis en oeuvre par voie thermoplastique, qui est enroulé en hélice et thermofixé, fabriqué selon un procédé conforme à l'une des revendications 1 à 9, caractérisé en ce que le tube, vu dans le sens de son avancement, présente une torsion de plus de 5° par spire autour de son axe longitudinal, dans le sens contraire au sens d'enroulement de l'hélice.

**11.** Tube hélicoïdal conforme à la revendication 10, caractérisé en ce que le matériau de départ est constitué d'un ou de plusieurs polyamides semi-cristallins ou de leurs mélanges, de mélanges de polyamides semi-cristallins et de polyamides amorphes, d'un ou de plusieurs polyamides amorphes, ou de mélanges de tels polyamides avec des polyamides de structure différente ou d'autres polymères, le polyamide semi-cristallin étant de préférence un polyamide 11, 12, 6, 12-12 ou 6-6, ou un mélange de ceux-ci.

**12.** Tube hélicoïdal conforme à la revendication 10, caractérisé en ce que le matériau de départ est constitué d'un ou de plusieurs polyesters ou alliages de polyesters à masse moléculaire élevée.

**13.** Tube hélicoïdal conforme à la revendication 12, caractérisé en ce qu'il contient jusqu'à 35 % en poids d'un plastifiant et/ou jusqu'à 30 % en poids d'un modificateur de la résistance au choc et/ou d'autres adjuvants, auxiliaires de traitement, colorants ou similaires.

**14.** Tube hélicoïdal conforme à l'une des revendications 10 à 13, caractérisé en ce qu'autour du tube est disposé un renfort, qui est de préférence constitué de fils (câblage), et mieux encore, entouré d'une enveloppe de protection.

**15.** Tube hélicoïdal conforme à l'une des revendications 10 à 14, caractérisé par une épaisseur de paroi valant de 0,3 à 3,0 mm et par un diamètre de passage valant de 2,0 à 26,0 mm, et de préférence, par une épaisseur de paroi valant de 1,0 à 2,0 mm et par un diamètre de passage valant de 4,0 à 18,0 mm.

FIG.1

20   22

24   16   18   26
     28

12

a        b

l

FIG.2

10

30

90°

32

12

34